# EUROPÄISCHE PATENTSCHRIFT

(11) **EP 1 792 173 B1**
(45) Veröffentlichungstag und Bekanntmachung des Hinweises auf die Patenterteilung: **08.07.2015**
(21) Anmeldenummer: 05771005.5
(22) Anmeldetag: 18.07.2005
(51) Int. Cl.: G01N 29/04, G01N 29/11, G01N 29/27, G01N 29/42, G01N 29/46, G01N 27/90, G01N 29/24, G01N 29/44

(54) **Vorrichtung und Verfahren zur Erkennung von Defekten an Gegenständen oder zur Ortung von metallischen Objekten**
Device and method for detecting flaws on objects or locating metallic objects
Dispositif et procédé pour détecter des défauts sur des objets ou pour localiser des objets métalliques

(30) Priorität: 19.07.2004 DE 102004034881; 12.08.2004 DE 102004039348; 23.08.2004 DE 102004040860; 21.10.2004 DE 102004051506; 25.10.2004 DE 102004051949
(43) Veröffentlichungstag der Anmeldung: 06.06.2007
(73) Patentinhaber: Prüftechnik Dieter Busch AG, 85737 Ismaning (DE)
(72) Erfinder: HERMANN, Michael, 78048 Villingen-Schwenningen (DE); HÖLZL, Roland, 81369 München (DE)
(86) Internationale Anmeldenummer: PCT/DE2005/001273
(87) Internationale Veröffentlichungsnummer: WO 2006/007832

(56) Entgegenhaltungen:
- WO-A-03/052400
- US-A- 5 525 907
- US-A1- 2004 066 189

## Beschreibung

Die vorliegende Erfindung betrifft eine Vorrichtung und ein Verfahren, welches sowohl für die Ortung von metallischen Gegenständen z.B. im Erdreich geeignet ist, als auch zur Erkennung von Defekten an Gegenständen verwendet werden kann. Insbesondere kann die Erfindung zur Erkennung von Defekten an metallischen Gegenständen, und hier insbesondere an ferromagnetischem Halbzeug oder Fertigprodukten verwendet werden.

In der WO 03/052 400 A2 wird ein Verfahren zur Prüfung von Strukturen oder Körpern auf Defekte beschrieben, bei dem zwei Anregungssignale verschiedener Frequenz verwendet werden und weiter das erhaltene Signal mit einem in der Vergangenheit erhaltenen Signal eines Körpers verglichen wird. Hier wird mit einer Abtastrate im Bereich des zwanzigfachen der Frequenz des zu analysierenden Signals gearbeitet. Die US 5,525,907 behandelt ein Magnetometer zur Detektion metallischer Materialien unter einer Oberfläche, das magnetische Pulse entgegengesetzter Polarität aussendet und die Antwortsignale mittels Fourier-Transformation auswertet. Die Ermittlung einer Trägerfrequenz ist hier nicht vorgesehen, da die magnetischen Pulse alle Frequenzen enthalten (Spalte 6, Z. 55). Die US 2004/066189 A1 beschreibt die Steuerung der Verstärkung eines Wirbelstromsignals. Dabei wird der Verstärkungsfaktor eines analogen Verstärkers dynamisch an die Signalstärke angepasst, wobei Schwankungen über den Frequenzbereich in der Amplitude, bedingt durch Widerstandstoleranzen, und in der Phase, bedingt durch parasitische Kapazitäten der verwendeten Schaltung, durch eine Anpassstufe für die Verstärkung und durch Phasenverschiebung des Trägersignals ausgeglichen werden.

Ähnliche Vorrichtungen und Verfahren dieser Art sind seit längerer Zeit bekannt, es besteht aber weiterhin die Aufgabe, höherwertige tragbare Meßgeräte der gattungsgemäßen Art zu schaffen, insbesondere solche auf Basis einer Wirbelstrom-Meßtechnik, oder auf Basis Ultraschall-Messtechnik oder artverwandter Meßtechniken.

Aufgabe ist es somit, ein Gerät der gattungsgemäßen Art bereitzustellen, für welches der erforderliche Aufwand zu dessen Herstellung signifikant reduziert ist, und welches gleichzeitig - möglichst noch bei verringertem Energiebedarf - präzisere und zuverlässigere Messungen ermöglicht.

Die vorliegende Erfindung löst das anstehende Problem nach Maßgabe der Merkmale der unabhängigen Patentansprüche. Ein wichtiger Aspekt der Erfindung beruht auf der Erkenntnis, daß es möglich ist, die Demodulation nicht nur im Umfeld der Trägerfrequenz, sondern auch bei deren Oberwellen vorzunehmen, wobei pro Vollwelle der Trägerfrequenz weniger als 1 Sample herangezogen wird.

Vorteilhafte Ausgestaltungen der Erfindung ergeben sich aus den Unteransprüchen.

Vorgesehen ist die Verwendung der beanspruchten Vorrichtung, bzw. des Verfahrens, im industriellen Umfeld, und zwar zur nicht-destruktiven Fehlererkennung an Halbzeug oder Fertigprodukten, sowie die Verwendung der Vorrichtung zur Lokalisation von metallischen Gegenständen im Erdreich, oder unter bzw. im Wasser.

Die erfindungsgemäße Vorgehensweise sieht zu diesen Zwecken ein als innovativ betrachtetes erweitertes Demodulationsverfahren vor, welches sich von einem einfachen Gleichrichtungsverfahren in erheblicher Weise und auch von herkömmlichen Synchrondemodulationsverfahren signifikant unterscheidet. Im übrigen kann das Demodulationsverfahren in diesem Zusammenhang auch für die Auswertung einer stark reduzierten Teilmenge der verfügbaren Informationen verwendet werden. Es kann unabhängig davon mit einem innovativen adaptiven Filterverfahren kombiniert werden.

Das erfindungsgemäße Demodulationsverfahren kann im wesentlichen als ein solches für amplitudenmodulierte Signale aufgefasst werden. Solche treten bekanntermaßen bei herkömmlichen Radio/Rundfunksignalen auf Das Demodulationsverfahren ist aber auch ohne weiteres in der Lage, Phasenveränderungen an einem zu demodulierenden Signal zu erkennen und kann dann als Phasendemodulationsverfahren aufgefasst werden. - Wie erfindungsgemäß bevorzugt vorgesehen, können diese Demodulationsverfahren z.B. auch bei der Wirbelstrom-, EMAT- oder Ultraschallprüfung an industriell gefertigten Prüflingen der Fall sein. Insofern wird für den erfindungsgemäßen Prozess der Demodulation die Existenz eines Trägers vorausgesetzt, zumindest dessen Rückgewinnbarkeit aus zugehörigen Signalquellen. - Herkömmliche Demodulationsverfahren der in der Materialprüfung angewendeten Art beschränken sich lediglich darauf , die spektrale Energiedichte und ggf. die Phasenlage im Umfeld der Trägerfrequenz zu ermitteln - insbesondere die der angrenzenden Seitenbänder, welche typischerweise die interessierende und zeitlich variierende Information tragen. Ein solches Vorgehen wird z.B. in der EP 0 844 499 A2 beschrieben. Demgegenüber sieht die Erfindung vor, zusätzlich gegebenenfalls auch die Energiedichten (sprich Amplituden) und/oder Phaseninformationen im Umfeld zumindest der zweifachen, bei Bedarf auch der dreifachen und ggf. auch der vierfachen Frequenz im Vergleich zur Trägerfrequenz zu ermitteln, allgemein solcher Oberwellen, deren Signal/Rauschverhältnis größer ist als eins. Darüberhinaus kann zu Kontrollzwecken ohne weiteres die Energiedichte eines DC-Anteils (mit der Frequenz Null) durch das erfindungsgemäße Verfahren bestimmt werden.

Der erfindungsgemäße Demodulationsvorgang für Signale zum Zwecke der Materialprüfung sieht also im Gegensatz zu herkömmlichen Demodulationsverfahren vor, auf Basis einer wählbaren aktuellen Anzahl von zeitlich sukzessiv und digital ermittelten Messwerten eine diskrete Fouriertransformation oder Wavelettransformation durchzuführen. Eine aktuell auf diese Weise ermittelte Amplitude oder Intensität des Trägers (d.h. des Trägersignals) im durch die Empfangsspule empfangenen Signal, eventuell auch in der Nachbarschaft des Trägers, ergibt dann einen ersten aktuellen Demodulationswert. Gleichzeitig kann auf diese Weise ein erster aktueller Phasenwert errechnet werden. Das gleiche gilt für die obengenannten Energiedichten bzw. Amplituden und/oder Phasenwerten von analysierbaren Oberwellen.

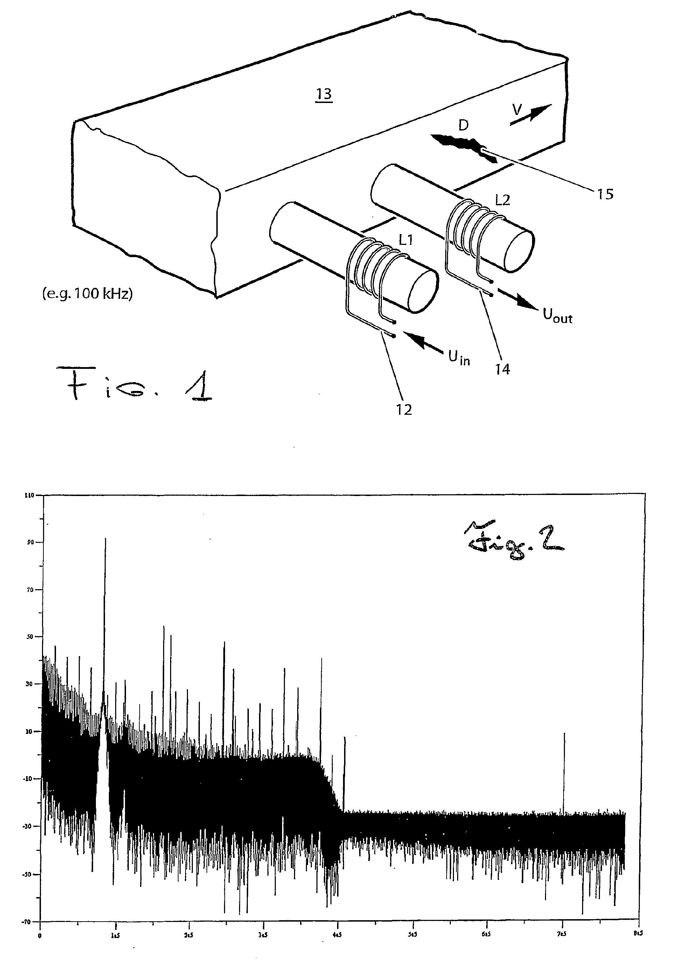

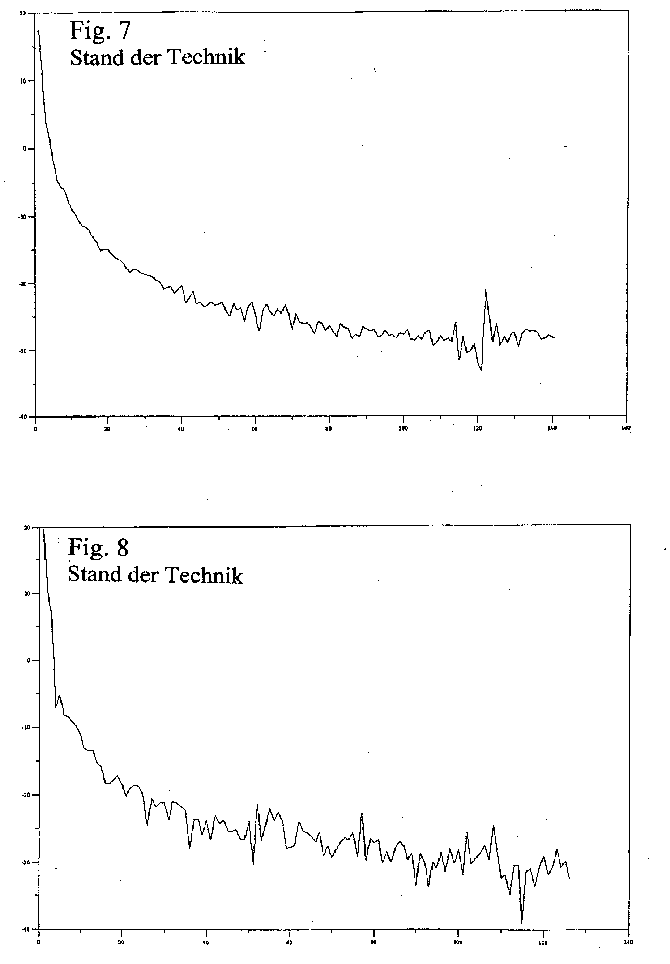

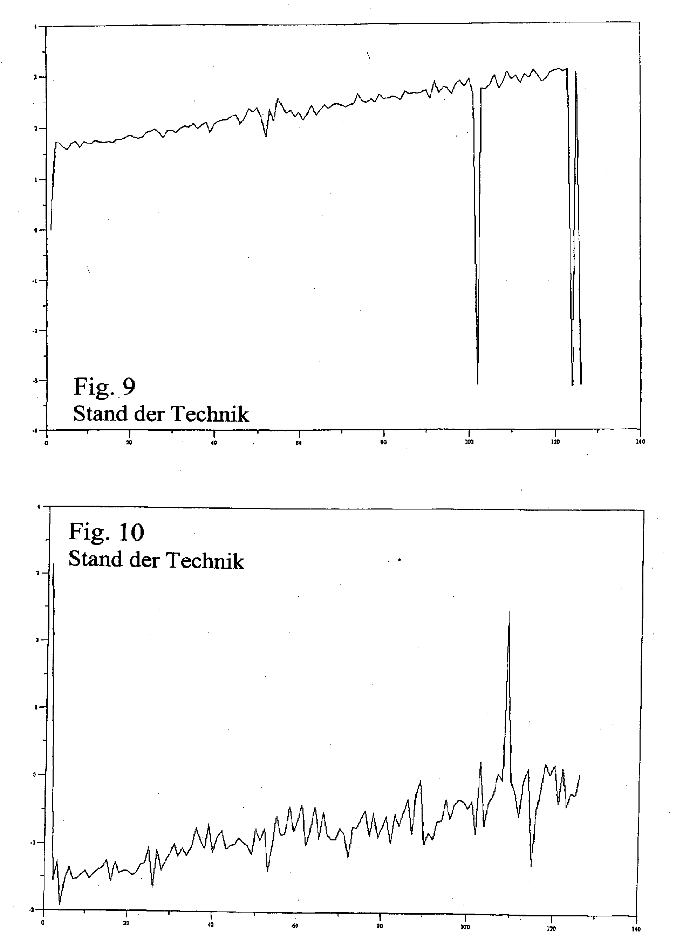

D.h., es wird gemäß der Erfindung nicht nur die zeitliche Variation der Amplitude oder der Phasenlage des Trägers betrachtet, sondern bevorzugt auch die zeitliche Variation der Amplitude oder der Phasenlage der genannten Oberwellen, und zwar einzeln oder in Kombination miteinander. Es werden im Vergleich zu bekannten Verfahren somit eine Mehrzahl an Amplituden- und/oder Phasenwerten bereitgestellt, welche gemäß der Erfindung je nach Anwendungsfall in additiv/subtraktiver Kombination(en) ausgewertet werden können, oder weiterhin auch andere Kennwerte, die mittels Multiplikation oder Division der ursprünglichen Werte miteinander erhalten werden können. - Es sei an dieser Stelle angemerkt, daß ein herkömmliches z.B. Synchrondemodulationssignal lediglich Amplituden- und Phaseninformationen bereitstellt im Bereich der auf einen Frequenz-Wert "Null" verschobenen Trägerfrequenzanteile (Prinzip der Synchrondemodulation). Eine gleichzeitige Bereitstellung solcher Informationen für höhere Frequenzen (d.h. zum Träger gehörende Oberwellen) ist mittels herkömmlicher Synchrondemodulation prinzipiell nicht möglich (vgl. Figuren 8 und 9). - Das erfindungsgemäße Verfahren basiert also darauf, daß unter passenden Voraussetzungen nicht nur der Informationsgehalt des Trägers und seiner Nachbarschaft abgeschöpft und genutzt werden kann, sondern ebenfalls und zusätzlich auch der Informationsgehalt der Oberwellen des Trägers, und zwar in Bezug auf deren zeitlich variablen Amplituden und/oder Phasenlagen. Sofern einige Oberwellen des Trägers sich als eher zeitlich konstant erweisen, kann dieser Sachverhalt zu Vergleichs- und Referenzzwecken genutzt werden. Vorgreifend wird hier auf die Fig. 2 verwiesen, welche das Spektrum eines Wirbelstromtestsignales wiedergibt, welches mit einem kommerziellen Testsystem an einem mehrere Defekte aufweisenden Prüfling generiert wurde. Basierend auf ca. 1,5 Millionen konsekutiv und äquidistant mit 16-bit-Auflösung abgetasteten Meßwerten (=Samples), welche anteilig auch die defektverursachten Signalanteile beinhalten, wird in halblogarithmischer fourietransformierter Darstellung deutlich gezeigt, daß ein solches Signal neben dem intensiven Trägersignal (mit einer Intensität von ca. 92 dB) auch die 1., 2. und 3. Harmonische sowie weitere Spektrallinien aufweist, die einen deutlichem Abstand zum sog. Rauschen (hier ca. 0 dB) besitzen. Zusätzlich kann die Intensität der im Signalgemisch enthaltenen Gleichspannungskomponente ( = Frequenz bei 0 kHz) abgelesen werden. Solche Informationen, genauer: die Variation solcher Informationen über die Zeit, können gemäß der Erfindung in innovativer Weise genutzt werden.

Die Erfindung wird im weiteren anhand der Zeichnung erläutert.

Es zeigt:
- Fig. 1: das Schema des allgemein verwendeten Meßprinzips
- Fig.2: gemittelte spektrale Anteile (PSD) eines so erhaltenen Meßsignals
- Fig.3: Spektrale Anteile bei Abwesenheit von Fehlern
- Fig.4: Spektrale Anteile in Gegenwart eines Fehlers
- Fig.5: Spektrale Anteile bei Abwesenheit von Fehlern, intermittierende Abtastung
- Fig.6: Spektrale Anteile in Gegenwart eines Fehlers, intermittierende Abtastung
- Fig.7: Spektrale Anteile bei Synchrondemodulation, intermitt. Abtastung, bei Abwesenheit von Fehlern
- Fig.8: Spektrale Anteile bei Synchrondemodulation, intermitt. Abtastung, in Gegenwart eines Fehlers
- Fig.9: Phasenverhalten bei Synchrondemodulation, intermitt. Abtastung, bei Abwesenheit von Fehlern
- Fig. 10: Phasenverhalten bei Synchrondemodulation, intermitt. Abtastung, in Gegenwart eines Fehlers
- Fig. 11: Phasenverhalten bei Fourierdemodulation, intermitt. Abtastung, bei Abwesenheit von Fehlern
- Fig. 12: Phasenverhalten bei Fourierdemodulation, intermitt. Abtastung, in Gegenwart eines Fehlers
- Fig. 13: Auswertungsschema für ein amplitudenmoduliertes Zeitsignal
- Fig. 14: das Schema eines erfindungsgemäßen Gesamtsystems
- Fig. 15: eine Resultatdarstellung, erhalten per fourierdemoduliertem Gesamtsignal bei Abwesenheit von Fehlern
- Fig. 16: eine Resultatdarstellung, erhalten per fourierdemoduliertem Signal basierend auf intermittierender Abtastung, bei Abwesenheit von Fehlern
- Fig. 17: dito für fourierdemoduliertes Gesamtsignal bei beobachtetem Fehler
- Fig. 18: dito für fourierdemoduliertes Signal ermittelt m. intermitt. Abtastung, bei beobachtetem Fehler
- Fig. 19: eine vergleichende Resultatdarstellung, erhalten per fourierdemodulierten Signalen, bei An- bzw. Abwesenheit eines Fehlers/Defektes

In Fig. 1 wird in schematischer Form ein Teil eines Prüflings 13 gezeigt, repräsentiert in Form eines industriellen Halbzeugs (Bramme), samt einem dort vorhandenen und zu detektierenden Defekt 15. Der Prüfling 13 kann sich - in an sich bekannter Weise - mit konstanter oder unterschiedlicher Geschwindigkeit (Parameter "v") an einer Teststation vorbei bewegen, welche mindestens eine Sendespule 12 (Symbol: L1) und mindestens eine Empfangsspule 14 (Symbol: L2) enthält. Die mindestens eine Sendespule 12 wird geeignet d.h. nach Maßgabe des Erfindungsgedankens mittels einer im wesentlichen konstanten Wechselspannung (ca. 1 - 1200 kHz, ggf. auch Sonderfrequenzen) bestromt. An der mindestens einen Empfangsspule 14 wird ein Wirbelstromsignal als Empfangssignal abgegriffen. Dieses ist von gleicher Frequenz wie die Sende-Wechselspannung, kann aber durch Defekt(e) 15 bedingte zeitliche Amplitudenschwankungen und/oder Phasenschwankungen aufweisen.

In Fig. 2 werden in halblogarithmischer Darstellung die Spektralanteile ("PSD") eines solcherart erhaltenen und mittels Fouriertransformation gewandelten Signals gezeigt. Die schmalbandige Linie maximaler Intensität ist dem sog. Träger zugeordnet, der in diesem Falle eine Frequenz 5.000 kHz aufweist. Wie man sieht, ist der DC-Anteil bei der Frequenz 0.0 kHz wesentlich geringer, und auch geringer als die Intensität der sog. 1. und 2. Oberwelle (also bei 10 kHz bwz. 15 kHz). Neben den letztgenannten Spektralanteilen sind diverse weitere Linien vorhanden, die sich deutlich von einem bei etwa 0 dB anzutreffenden Basispegel abheben. In dieser Figur wird das Frequenzspektrum wiedergegeben, welches auf einer sehr großen Anzahl sukzessiv digital abgetasteter Meßwerte (Samples) basiert und welches Signalanteile enthält, die im wesentlichen, sowohl auf defektfreie Bereiche des untersuchten Prüflings zurückgehen, als auch diejenigen Signalanteile umfassen, die auf einige (in diesem Fall 4 Stück) Defektbereiche des Prüflings zurückzuführen sind. - Es sei noch einmal festgehalten, daß das erfindungsgemäße Verfahren im Gegensatz zu anderen bislang benutzten Demodulationsverfahren nicht nur die zeitliche Variation des Trägers bestimmen kann, sondern zusätzlich die Größe und zeitliche Variation einer eventuell überlagerten Gleichspannungskomponente, so daß ein zusätzlicher Meßwert ausgewertet und kontrolliert werden kann.

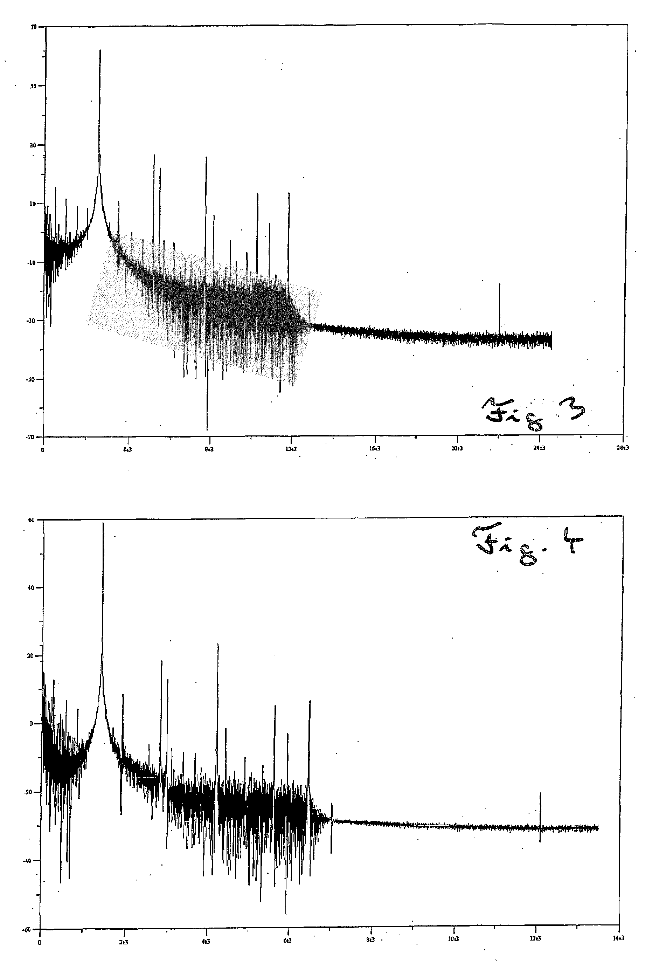

Fig. 3 repräsentiert einen ähnlichen Sachverhalt wie Fig. 2, jedoch basierend auf einer reduzierten, sukzessiv aufgenommenen Anzahl von Abtastwerten aus der Menge der obengenannten Samples, welche auf defektfreie Bereiche des untersuchten Prüflings zurückgehen. Die anteiligen Spektrallinien erscheinen aufgrund der reduzierten Samplezahl (lediglich ca. 50000 Stück) im Vergleich zu Fig. 2 verbreitert. - Die Spektrallinie für die Trägerfrequenz repräsentiert gemäß der Erfindung das bzw. ein zu demodulierendes Signal,
wobei sowohl Intensität als auch Phasenlage dieses Signals von Interesse ist. - Wie man bereits hier in Fig. 3 sieht, hat sich im Vergleich zu den vorherigen Figuren das Verhältnis der Intensitäten von 1. Oberwelle zur Trägerlinie und auch dasjenige der 1. Oberwelle zur 2. Oberwelle merklich verändert.

Fig. 4 repräsentiert einen ähnlichen Sachverhalt wie Fig. 2, ebenfalls basierend auf einer reduzierten Anzahl (ca. 30000) von Abtastwerten aus der Menge der obengenannnten Samples, welche nun aber auf einen einzelnen defektiven Bereich des untersuchten Prüflings zurückgehen. Die anteiligen Spektrallinien erscheinen ebenfalls verbreitert, und es wird deutlich, daß sich das Verhältnis der Intensitäten von Trägerlinie, 1. und 2. Oberwelle, somit die Intensitäten eines durch Demodulation bereitgestellten Signalvektors, erneut verändert hat.

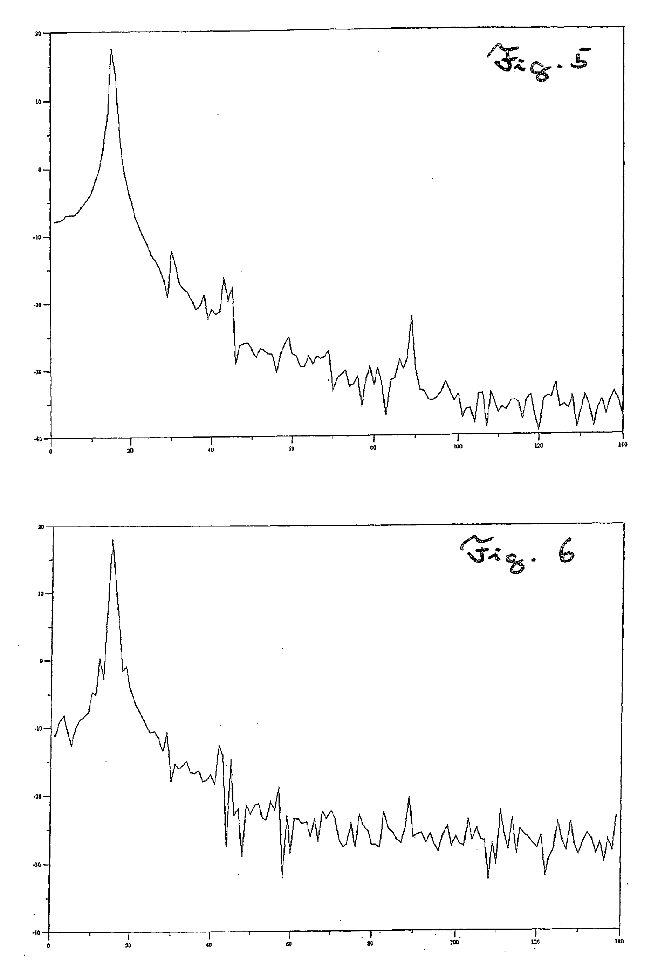

Fig. 5 ist mit Fig. 3 zu vergleichen, beruht aber auf einem anderen wichtigen Aspekt der Erfindung, gemäß dem nämlich eine vergleichbare Darstellung mit wesentlich reduziertem Hard- und Softwareaufwand erhalten werden kann, wenn intermittierend Meßwerte erfaßt ("gesampelt") werden. D. h. das gleiche Signal wurde nicht anhand konsekutiv erfaßter Meßwerte ausgewertet, sondern lediglich anhand einer drastisch reduzierten Teilmenge von Abtastwerten. In dem gezeigten Falle wurde beispielsweise nur jeder 97. Abtastwert ("Sample") ausgewertet. Wie man sieht, ergibt sich ein mit Fig. 3 vergleichbarer, wenn auch reduzierter Informationsgehalt.

Ähnliches gilt für Fig. 6, welche mit Fig. 4 zu vergleichen ist, d.h. auf einer ebenfalls reduzierten Anzahl von Abtastwerten beruht. Diese gehen hier jedoch, in direkt vergleichbarer Weise, auf einen einzelnen defektiven Bereich des untersuchten Prüflings zurück. Auch in diesem Falle wurde sukzessiv nur jedes 97. Sample zur Signaldarstellung des demodulierten Signals herangezogen. Neben der Trägerlinie sind die Intensitäten der 1. und 2. Obewelle zu erkennen.

Im Gegensatz dazu zeigt Fig. 7, welche nunmehr mit Fig. 3 bzw. Fig. 5 zu vergleichen ist, d.h. ebenfalls auf einer weiter reduzierten Anzahl von Abtastwerten beruht, folgendes: Bei einer mit paarweise Sinus- und Cosinuswerten arbeitenden Synchrondemodulation, welche in vergleichbarer Weise auf sukzessiv und/oder intermittierend ausgewählten Samples basiert (hier aber jedes 96. Sample erfaßt), wird die Trägerlinie lediglich zu einer Gleichspannungskomponente (mit zeitvariablem Charakter) konvertiert. Informationen zu irgendwelchen Oberwellen oder der ursprünglich vorhandenen DC-Komponente des Signals sind aus gegebenen Gründen nicht mehr vorhanden, unabhängig davon, ob ein durch einen Defekt verursachtes Signal vorliegt oder nicht.

Das Gegenbeispiel wird in Fig. 8 gezeigt, welche auch auf sukzessiv aber intermittierend ausgewählten Samples basiert (ebenfalls nur jedes 96. Sample), die aber auf einen Signalbereich zurückgehen, der für den bereits in Fig. 4 und 6 gezeigten Defekt oder Materialschaden repräsentativ ist. Neben der aktuell vorliegenden Gleichspannungskomponente (bei der Frequenz 0 kHz) sind keine auswertbaren weiteren Spektrallinien vorhanden.

Die zu Fig. 7 und 8 gehörige Phaseninformation auf Basis einer Synchrondemodulation wird sodann in Fig. 9 resp. 10 gezeigt, welche aber nur wenig nutzbar ist. Es wird lediglich wiedergegeben, daß die Phasendifferenzen der Spektralanteile bei Abwesenheit eines Defektes geringere Varianz aufzuweisen scheinen als bei aktueller Beobachtung eines Defektes.

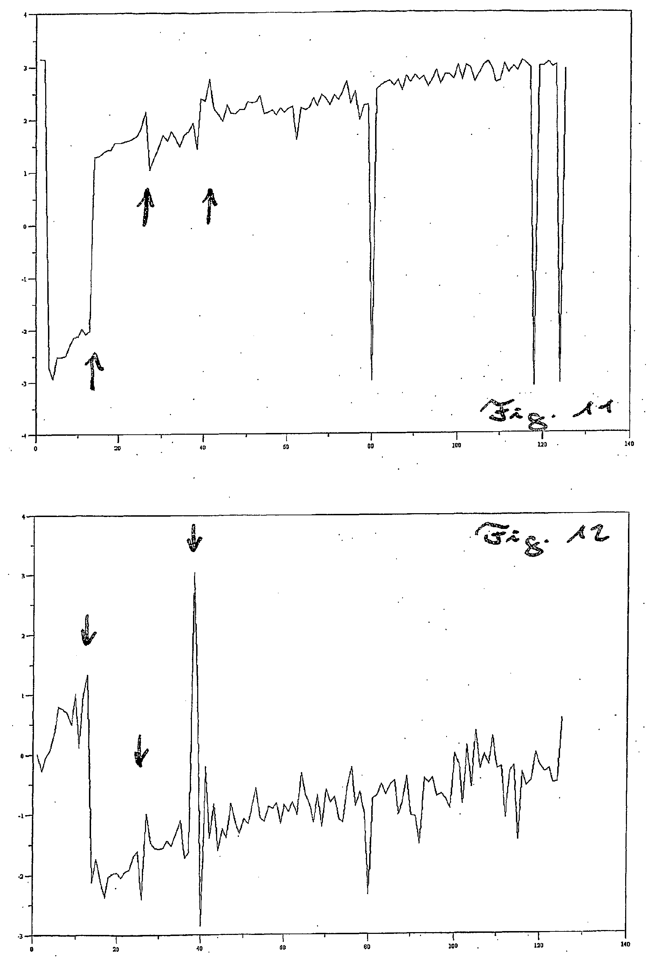

Wie aus Fig. 11 ersichtlich, bietet das erfindungsgemäße Verfahren hier nutzbare Vorteile, indem neben der Phaseninformation für den Träger zusätzlich speziell diejenigen für die 1. und 2. Oberwelle dargestellt werden können (vgl. die in der Fig. eingetragenen Hinweis-Pfeile). Dies gilt auch für "gelückte" Datenerfassung, welche hier wiederum auf beispielsweise jedem 97. genutzten Sample eines Signals basiert, und zwar bei Defektfreiheit des Prüflings. (In der Praxis wird man verständlicherweise auf die Erfassung von nicht genutzen Samples verzichten und dann bei stark reduzierter Sample-Frequenz lediglich solche Samples erfassen, die der als Beispiel genannten Teilmenge entstammen, basierend auf jedem 97. Sample. - Diese Vorgehensweise ermöglicht unter anderem die Verwendung langsamer, hochauflösender oder einfach nur kostengünstiger Analog-Digital-Wandler und reduziert darüberhinaus in vorteilhafter Weise den erforderlichen Rechenaufwand).

Demgegenüber zeigt Fig. 12 im Vergleich zu Fig. 11 die Verhältnisse, wenn der Prüfling einen Defekt aufweist. Die gezeigte Gesamtphasenverschiebung ist unbeachtlich und ist einem Startphasenwert zuzuordnen. Wichtig ist vor allem, daß neben der Phasenlage des Trägers eine sehr signifikante Phaseninformation der 2. Oberwelle erkennbar ist; in gewisser Weise auch eine solche in der Umgebung der 1. Oberwelle (vgl. die in die Fig. eingetragenen Pfeile). Es ist eines der Anliegen der Erfindung, auch eben diese Phaseninformation in neuartiger Weise (also speziell auch für die Alternative "gelückte" Betriebsweise, d. h. nach Art einer Unterabtastung mit deutlich weniger als 1 Sample pro Vollwelle des Trägers) zur verbesserten Detektion von Defekten an Gegenständen zu verwenden. In gleicher Weise kann diese Phaseninformation zur verbesserten Detektion von Gegenständen durch batteriebetriebene sog. Metallsuchgeräte herangezogen werden. In diesem Falle ermöglicht die "gelückte" Datenerfassung und Betriebsweise mit Unterabtastung eine sehr willkommene Energieeinsparung.

Bei Auswertung konsekutiv (also ohne zeitliche Lücken) erfaßter Daten ist es sinnvoll, standardmäßige Fouriertransformationen ( z.B. per FFT oder per DFT ) oder ggf. auch Wavelet-Transformationen zu verwenden. Eine erste Filterwirkung ergibt sich in an sich bekannter Weise dadurch, daß die per Fouriertransformation dargestellten Spektral-Linien eine Breite aufweisen, die umgekehrt proportional ist zur Anzahl der zugrundegelegten Samples (Unschärferelation). Insofern ist es nützlich, nicht weniger als jeweils 9 geeignete Samples einer Fourier-Transformation zuzuführen, damit neben der Träger-Linieninformation (welche einen aktuellen Demodulations-Intensitätswert und dessen Phasenbezug repräsentiert) zumindest auch die 1. und die 2. Oberwelle nach Betrag (Intensität) und Phase dargestellt werden können. Auf diese Weise werden parallel und ohne Hardware-Mehraufwand zusätzliche Demodulationsergebnisse für zwei oder mehr weitere Frequenzen erhalten.

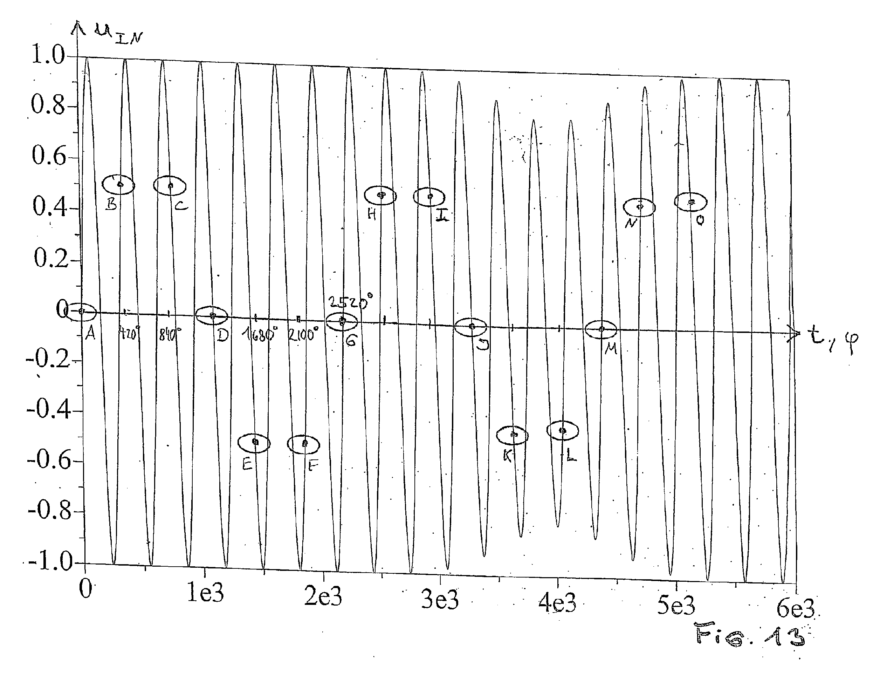

Fig. 13 zeigt als Beispiel zu verstehendes Schema die Vorgehensweise bei Anwendung der "gelückten" also intermittierend (bevorzugt äquidistant intermittierend) arbeitenden Datenerfassung. Es möge wie gezeigt per Spule L2 eine über die Zeit "t" bzw. ein zugehöriges Winkelmaß "phi" sinusförmig verlaufende Trägerspannung "U in" erfaßt werden. Diese wird bei Anwesenheit eines Fehlers kurzfristig modifiziert (vgl. Zeitmaß 4e3) um danach wieder auf den ursprünglichen Wert anzusteigen. Wie dargestellt, ist es möglich, eine Datenerfassung zu den Zeiten A, B, C, D, E, F, G, H, I, J, K, L, M, N, O durchzuführen, insbesondere unter Verwendung einer Zusammenschaltung eines sog. A/D-Konverters und eines Sample-and-Hold-Gliedes. Wie gezeigt, möge die Erfassung im zeitl. Abstand entsprechend 420° el. des Trägers stattfinden, also nach Art einer Unterabtastung bei 0°, 420°, 840°, 1260° el. usw. In an sich bekannter Weise entsteht so ein Abbild sowohl der Trägerspannung als auch der Modulationseinwirkung, vgl. Zeitpunkte K und L, die einen geringeren Spannungswert aufweisen als zu den vergleichbaren Zeitpunkten E und F. Wie ebenfalls an sich bekannt, werden nicht nur die Intensitätsverhältnisse abgebildet, sondern auch die zugehörigen Phasenverhältnisse. Insofern gibt eine Fourier-Transformation, die z.B. die bei C D E F G H I J K vorliegenden neun Spannungswerte verarbeitet, nicht nur einen mittleren Amplitudenwert für die Grundwelle wieder, sondern auch deren Phasenlage bezüglich einer Referenz-Phase. Hierzu ist es ggf. in bekannter Weise erforderlich, die Startphasenlage des jeweils ersten zu transformierenden Samples korrekt in Anrechnung zu bringen. Die abschnittsweise Erfassung von Fouriertransformierten kann somit per Blöcken von z.B. je 9 (oder wesentlich mehr) Samples durchgeführt werden, die sich durch/nach Verschiebung um definierte Winkel-Incremente, sprich Samplezahl, ergeben. Dem Fachmann sind dabei Verfahren geläufig, die es gestatten, den Rechenaufwand zur Ermittlung abschnittsweiser Resultate gering zu halten, z.B. per FFT im Falle von 8 oder 16 zugrundegelegten Samples pro Block. Wie bereits erwähnt, kann durch eine intermittierend oder unterabtastend arbeitende Signalerfassung nicht nur erheblich an Hardwarekosten für die zugehörige Elektronik eingespart, sondern auch der erforderliche Rechenaufwand drastisch reduziert werden. In den bereits gezeigten Fig. 5 bis Fig. 12 ist dies z.B ein Faktor von ca. 100, der ohne Zuhilfenahme von Meßgeräten oder dem ungeschulten Benutzer sofort und in positiver Weise auffällt.

Es ist festzuhalten, dass die auf die geschilderte Weise erhaltenen Demodulationsergebnisse zum Zwecke der Materialprüfung für z.B. vier Frequenzen incl. der Frequenz 0.0 kHz lediglich durch ein einziges Rechenverfahren, nämlich z.B. per Spektralanlyse mittels diskreter Fouriertransformation, erhalten werden, und dabei zum Zwecke der Signalkonversion lediglich einen einzigen Analog/Digitalwandler erfordern. Die Erfindung schließt jedoch nicht aus, dass zum Zwecke eines erhöhten Datendurchsatzes zwei oder weitere unabhängig voneinander arbeitende Analog/Digitalwandler vorgesehen werden, welche sukzessive getriggert werden. Mit der zuletzt genannten Lösung ist es möglich, relativ langsam arbeitende A/D-Wandler vorzusehen, und trozdem eine zügige Datenerfassung zu betreiben. Wie erwähnt, kann das genannte Rechenverfahren in besonders vorteilhafter Weise auf der Analyse von Meßdaten beruhen, die nach Art einer Unterabtastung, insbesondere einer zeitlich äquidistanten Unterabtastung, gewonnen worden sind.

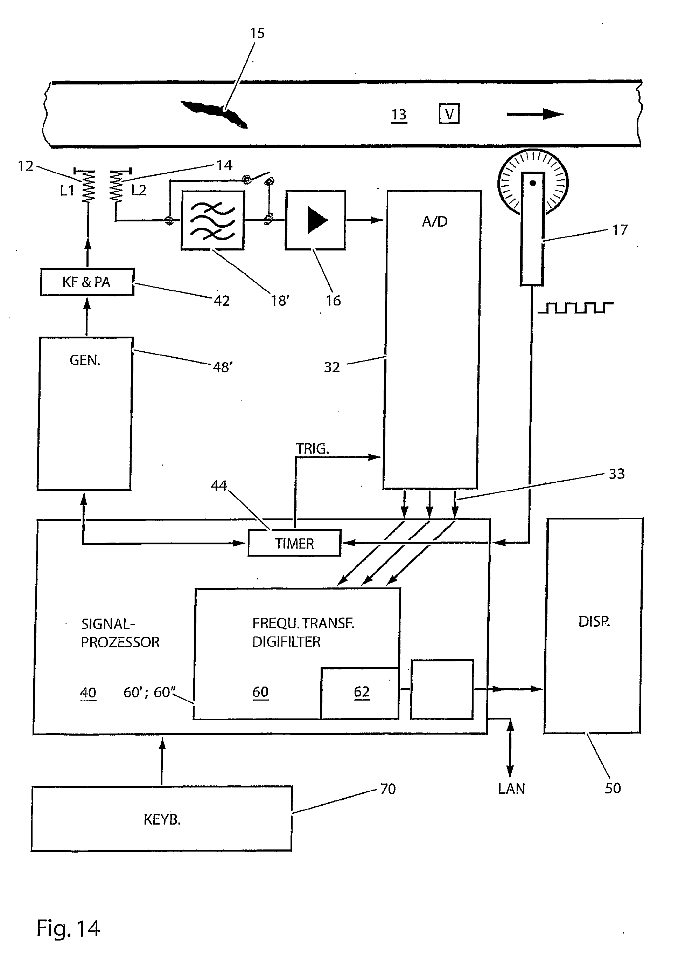

Die Bestandteile eines erfindungsgemäßen Gesamt-Systems wird im folgenden anhand der Zeichnung Fig. 14 beschrieben.

Im oberen Teil der Fig. 14 wird in schematischer Weise ein Prüfling 13 in Form eines industriellen Halbzeugs (Bramme) gezeigt samt einem zu detektierenden Defekt 15. Der Prüfling 13 kann sich mit unterschiedlicher Geschwindigkeit (Parameter "v") an einer Teststation vorbei bewegen, welche mindestens eine Sendespule 12 (Symbol: L1) und mindestens eine Empfangsspule 14 (Symbol: L2) enthält. Die Geschwindigkeit des Prüflings wird mit einem elektronisch wirkenden Geschwindigkeitsaufnehmer 17 erfaßt, welcher entsprechende elektronische Signale abzugeben gestattet.

Neben einem hochauflösendem A/D - Wandler 32 nach derzeit neuester Technologie ist eine Elektronik bzw. Computer 40 mit den Eigenschaften eines Signalprozessors wesentlicher hardwaremäßiger Bestandteil der Erfindung. Ein Counter/Timer-Baustein 44 kann außerhalb des Computers 40 vorgesehen oder in diesen integriert sein. Im Subsystem 60 befindet sich die erfindungsgemäß erforderliche Einrichtung zur Erzeugung von Fouriertransformierten (alternativ bzw. äquivalent: Wavelet-Transformierten) und eine als Digitalfiltereinheit bezeichnete Vorrichtung mit softwaremäßig definierten Filtersätzen 62. Diese sind ebenfalls vorzugsweise im Computer 40 integriert und können in dedizierter Hardware oder kostensparend lediglich in einer im Computer ausführbaren Software implementiert sein. Wie technisch an sich üblich, kann der Computer 40 nach außen hin an eine Tastatur 70, ein Display 50 und/oder an ein lokales Netzwerk (Bezugszeichen "LAN") bzw. WAN angebunden sein.

Auch im stationären, also unbewegten Zustand des Prüflings 13 erzeugt der Timer 44 ein Zeitsignal hoher Frequenzstabilität. Dieses Zeitsignal kann nach Wunsch bzw. den technischen Erfordernissen in der Frequenz variiert werden und steht typischerweise als Rechtecksignal zur Verfügung, wie dies an sich für einen Timer bekannt ist. Das genannte Rechtecksignal wird auf einen Generator 48' als Vorgabefrequenz geliefert. Der Generator 48' erzeugt daraus entweder ein Rechtecksignal oder ein Sinussignal, bevorzugt mit einstellbarer Amplitude. (Ein Rechtecksignal besitzt in an sich bekannter Weise ungeradzahlige, hier vorteilhaft verwendbare Oberwellen). Das genannte Signal wird auf einen optional vorgesehenen Kurvenformer KF und einen Leistungsverstärker PA gegeben, welche in einer Einheit 42 zusammengefaßt sein können. Der Leistungsverstärker ist geeignet, die Sendespule 12 zu bestromen. Infolgedessen wird im Prüfling 13 in an sich bekannter Art ein Wirbelstromfeld induziert. Dieses wird von der schematisch gezeigten Empfangsspule 14 - welche nach dem Stand der Technik auch als Differenzspulensatz o.ä. ausgebildet sein kann - registriert und als Wechselspannung ggf. über einen oder mehrere Bandpässe 18' und vorzugsweise über zumindest einen (bevorzugt einstellbaren) Vorverstärker 16 dem bereits erwähnten A/D-Wandler 32 zugeführt. Dieser besitzt eine Auflösung von typischerweise 18 bit oder besser, bevorzugt 22 bit oder besser. Unter speziellen Voraussetzungen (z.B. bei low-cost Geräten) kommt auch eine Auflösung von 12 bit in Frage, insbesondere wenn ca. je 1000 oder mehr Samples einer Fourier-Transformation zugeführt werden. Der A/D - Wandler 32 ist bevorzugt in der Lage, weit mehr als 500 Analog/Digitalkonversionen pro Sekunde durchzuführen. Wie an sich bekannt, resultiert bei Anwesenheit eines Defektes 15 im Prüfling ein modifiziertes Wirbelstromfeld, welches eine in Amplitude und/oder Phase veränderte Wechselspannung in der Empfangsspule 14 induziert.

Dementsprechend hängt die Leistungsfähigkeit des erfindungsgemäßen Verfahrens in gewisser Weise von der Leistung des bzw. der verwendeten A/D-Konverter ab. Dabei ist neben der Mindest-Konversionszeit auch deren Auflösung (in bits) von Bedeutung. Ansonsten existiert gemäß der Erfindung eine erhebliche Gestaltungsmöglichkeit in Hinblick auf ein zu verwendendes Abtast-Schema; d. h. zu welchen Zeiten das von der Spule L2 gelieferte Signal ausgewertet (gesampelt) wird bzw. werden soll. Es wird lediglich eine Samplezahl von > 3 , besser > 9 mit jeweils unterschiedlicher Phasenlage bezogen auf die Nulldurchgänge des Trägersignals für einen einzelnen Demodulationsvorgang zugrundegelegt. Nach oben hin ist diese Zahl nur durch praktische Gegebenheiten begrenzt. Auch die Art und Weise der Bereitstellung von jeweils satzweise auszuwertenden Samples kann nach sehr unterschiedlichen Schematas erfolgen. Wiewohl eine zeitlich äquidistante Bereitstellung von Samples bevorzugt wird, ist dies nicht unbedingt erforderlich, da im Prinzip auch eine Analyse nach Lomb (Lomb-Scargle-Periodogramm) zum Zwecke einer erfindungsgemäßen Demodulationswirkung vorgenommen werden kann.

Bei Verwendung von Fourier-Methoden ist es sinnvoll, die als komplexe Zahlen verwendeten Faktoren (sog. "n-te Einheitswurzeln") bei der Berechnung eines einzelnen Satzes an Samples so zu wählen und zu verwenden, daß die (komplexwertige) Summe dieser Faktoren in an sich bekannter Weise den Wert 0 ergibt. Bei der äquivalenten Anwendung von Wavelet-Verfahren ergeben sich ähnliche Randbedingungen und Betrachtungen. - Diese an sich sinnvolle Vorgehensweise ist jedoch nicht zwingend, da ggf. auf äquivalente Rechenverfahren zurückgegriffen werden kann.

Optional kann die Erfindung auch mit einem elektronisch wirkenden Geschwindigkeitsgeber 17 kombiniert werden. Diese Option hat den besonderen Vorteil, dass im Vergleich zu derzeit handelsüblichen Geräten eine erhebliche Einsparung an Filterbaustein-Sätzen zwecks weiterer Behandlung des oder der demodulierten Signale(s) auf nachfolgend beschriebene Weise erzielt werden kann:

Werden nur wenige Samples pro auszuwertendem Datensatz verwendet, so werden spektrale Anteile des auszuwertenden bzw. zu demodulierenden Signals aus einem größeren Umfeld der Trägerfrequenz, und auch der zugehörigen Oberwellen, bereitgestellt. Dies beruht auf der sogenannten Unschärferelation. Es ist bekannt, daß das genannte Umfeld bzw. die jeweilige Linienbreite und somit das gewünschte Demodulationsergebnis umgekehrt proportional ist zur Anzahl der jeweils aktuell verwendeten Samples.

Wird eine große Selektivität d.h. große Linienschärfe erreichen, ist gemäß der Erfindung eine große Anzahl von Samples einer jeweils aktuell auszuführenden Rechnung (Transformation, z.B. DFT, FFT o.ä.) zuzuführen.

Unter dieser Voraussetzung ist es erfindungsgemäß möglich, mit sehr geringem Hardware-Aufwand die derzeitigen kostenintensiven Filterstufen zu ersetzen, die eine angepaßte Zusatz-Behandlung des auszuwertenden Signals nach Maßgabe einer variablen Prüflingsgeschwindigkeit durchführen.

Hierbei wird davon ausgegangen, daß bei langsamen Prüflingsgeschwindigkeiten zumeist nur relativ kleine, d.h. schmalbandige Frequenzbereiche im Umfeld des Trägers auszuwerten sind. Bei herkömmlicher Synchrondemodulaton wird dies mittels eines passend eingestellten Tiefpasses von geringer Bandbreite vorgenommen. - Bei größeren Prüflingsgeschwindigkeiten sind breitere und vergrößerte Frequenzbereiche im Umfeld des Trägers auszuwerten. Die Situation ist entfernt ähnlich wie bei der Wiedergabe von Tonband-Informationen, wo eine langsame Wiedergabegeschwindigkeit des Tonbandes lediglich mit einer geringen Signal-Bandbreite, eine große Wiedergabegeschwindigkeit jedoch mit einer großen Signal-Bandbreite einhergeht.

Die oben genannte Unschärfebedingung bedeutet ebenfalls, daß die erzielbare Bandbreite der zur Verfügung stehenden Meßzeit umgekehrt proportional ist, sofern man die normalerweise gegebene Proportionalität von Sampleanzahl und zugehöriger Meßzeit annimmt.

Wird dementsprechend bei großer Prüflingsgeschwindigkeit "v" eine große Filterbandbreite für das auszuwertende Signal gewünscht, so ist eine kleine Anzahl von Samples, also eine kleine (effektive) Meßzeit zu wählen. (Die effektive Meßzeit wird aber wie oben erläutert durch geeigneten lückenden bzw. unterabtastenden Betrieb passend gestreckt, um den Gegebenheiten eines A/D-Wandlers oder der zur Verfügung stehenden Rechnerleistung gerecht zu werden).

Bei geringer Prüflingsgeschwindigkeit "v" ist es dementsprechend erforderlich, für die angestrebte kleine gewünschte Filterbandbreite eine größere Anzahl Samples zugrundezulegen.

Gemäß der Erfindung kann dies mit einem überraschenden Minimum an Aufwand dadurch erzielt werden, daß die Anzahl der pro Transformation zugrundegelegten Samples direkt porportional der von dem Geschwindigkeitsgeber abgegebenen Impulslängen gewählt wird.

Dieser Geber kann in einfacher, an sich bekannter Weise z.B. mittels Lichtschranken so konstruiert werden, daß eine langsame Geschwindigkeit "v" des Püflings ein niederfrequentes Geschwindigkeitssignal liefert, welches mit wachsender Geschwindgkeit proportional höherfrequent wird. Ein Beispiel könnte sein: Geschwindigkeit 0,1 m/sec bewirkt Impulslängen von 15000 Mikrosekunden, eine Geschwindigkeit von 10 m/sec erzeugt Impulslängen des Geschwindigkeitssignals von lediglich 150 Mikrosekunden usw.

Dementsprechend kann gemäß der Erfindung die gewünschte Filterwirkung am bereits demodulierten Signal jetzt dadurch gewonnen werden, daß die ermittelte Impulslänge des Geschwindigkeitsgebers als ein im wesentlichen direktes Maß für die Anzahl der jeweils satzweise auszuwertenden Samples genommen wird, so daß im letztgenannten Falle z.B. ca. nur 75 Samples einer DFT oder FFT zugeführt werden und im ersteren Falle z.B. ca. 7500 Samples. Wie dem Fachmann geläufig ist, steigt der Rechenaufwand bei der Berechnung einer Fouriertransformierten für eine zunehmende Anzahl von Samples lediglich sub-proportional, so daß im erfindungsgemäßen Zusammenhang eine geschickte Nutzung der Rechenkapazität der vorgesehenen Elektronik stattfinden kann. Es ist nützlich, die Zahl der jeweils einer Transformation zuzuführenden Meßwerte zu limitieren, zumindest sollte bei Stillstand des Prüflings eine entsprechende Status-Information vom Geschwindigkeitsgeber geliefert werden.

Weitere Gestaltungsmöglichkeiten ergeben sich dadurch, daß auch die Sendefrequenz in gewissem Umfange modifiziert werden kann, indem diese durch ganzzahlige Teilung von einer wesentlich höherfrequenten Zeit- oder Frequenzbasis abgeleitet wird. Insbesondere ist es von Nutzen, eine sinusförmige Sendespannung für Spule L1 in an sich bekannter Weise mittels eines softwaregesteuerten Zählers und einer zugeordneten digitalen Sinus-Tabelle zu erzeugen, sei es per nachgeschaltetem D/A-Wandler oder mittels eines nachgeschalteten Timer-Bausteins per Pulscode-Modulation. Selbstverständlich ist es kostengünstiger, mit rein digitalen Mitteln lediglich eine frequenzvariable Rechteckspannung bereitzustellen, welche wie erwähnt den zusätzlichen Vorteil besitzt, die interessierenden Oberwellen in signifikanter Intensität ohne Mehraufwand zu liefern.

Um Energie beim Betreib eines erfindungsgemäßen Meßgerätes einzusparen, kann so verfahren werden, daß die Sendespule lediglich einige wenige Vollwellen vor Erfassung des Abtastwertes nach Maßgabe eines gewünschten Sendesignals bestromt wird (um einen Einschwingvorgang zu realisieren) und sogleich nach Erfassung des Abtastwertes zu einem passend gewählten Zeitpunkt stromlos geschaltet wird, wobei ein technisch vorteilhaftes Ausschwingverhalten der Sendespule angestrebt wird. Dies ist insbesondere für batteriebetriebene, portable Geräte von Vorteil.

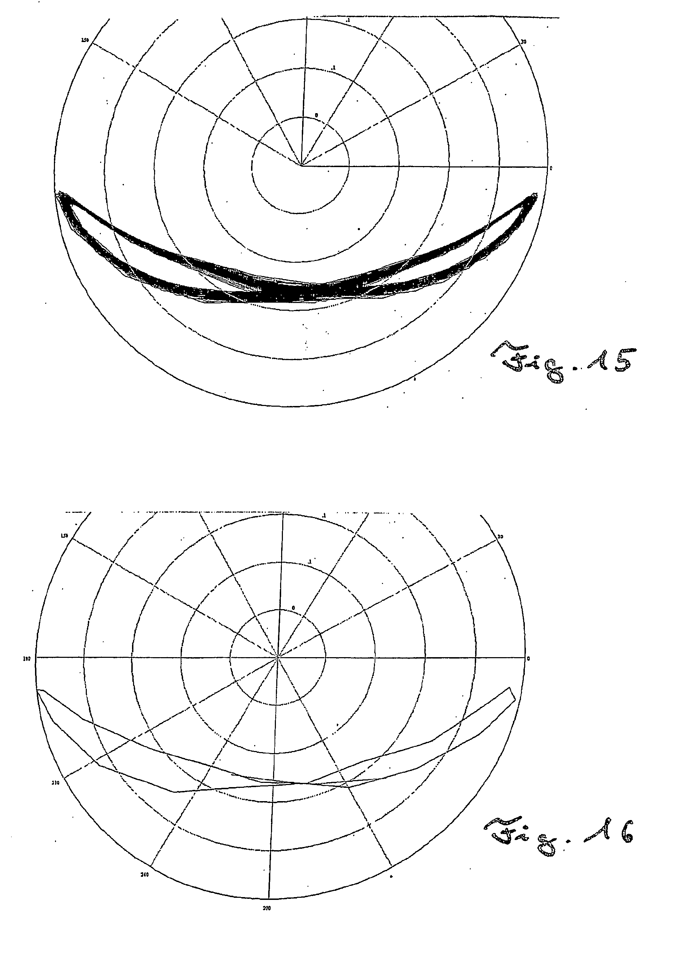

In Fig. 15 bis 18 werden einige Ergebnisse für visuelle Auswertung gezeigt, wie sie gemäß der Erfindung anhand der bereits den Fig. 3 bis 6 sowie 11 und 12 zugrundegelegten Informationen, also insbesondere anhand der diversen Amplituden- und Phaseninformationen, gewonnen wurden. Es werden in mehrfacher Relation und Verkettung die Daten des Trägers, der 1. und der 2. Oberwelle verwendet.

Fig. 15 beruht dabei auf der fortlaufenden Auswertung von Fouriertransformationen, die anhand all jener Samples durchgeführt wurden, die auch für Fig. 3 herangezogen wurden, d.h. ohne Defekt eines Prüflings, und während eines kürzeren Zeitintervalls.

Fig. 16 zeigt eine vergleichbare Darstellung, basierend auf den auch zu Fig. 5 und 11 gehörigen Daten ("gelückte" Datenerfassung nach Art einer Unterabtastung). Man erkennt die zu Fig. 15 vergleichbare Signalform von etwa mondsichelartiger Kontur, wenn auch mit reduziertem Informationsgehalt.

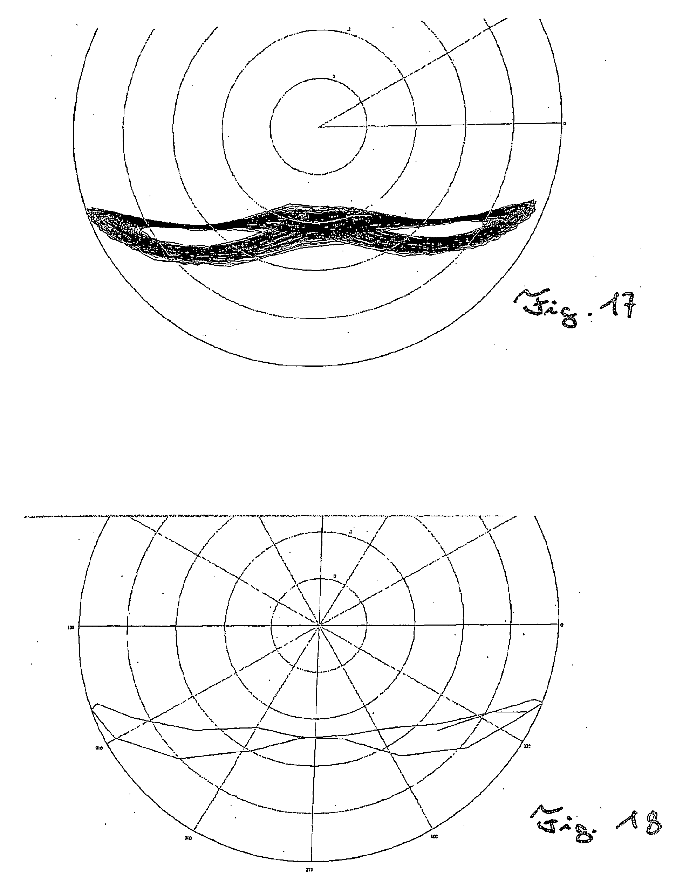

Zum Vergleich zeigen Fig. 17 und 18 den Fall bei defektiver Prüflings-Oberfläche, ohne bzw. mit "lückender" Datenerfassung (mit gewählter Distanzzahl = 97 Samples). Die Einhüllende der dargestellten Linien ist nunmehr, also im Falle eines detektierten Materialfehlers, von deutlich gestreckter Gestalt und wesentlich anders als im Falle der Fig. 15 und 16.

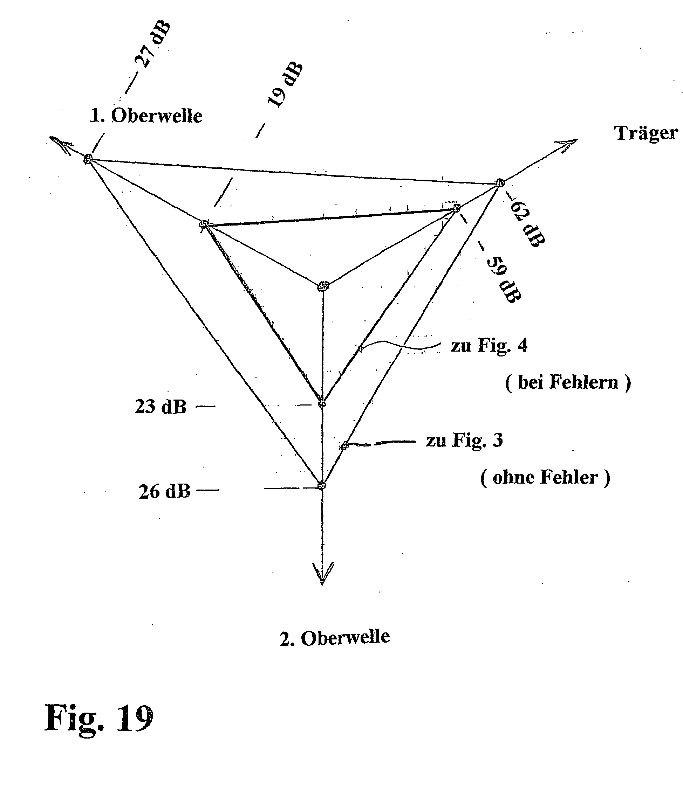

Eine andere Form der Resultatdarstellung wird in Fig. 19 wiedergegeben. Es werden in trigonalen Koordinaten oder in Dreieckskoordinaten in geeignet skaliertem logarithmischen (also z.B. Dezibel-) oder linearem Maßstab gleichzeitig aktuell beobachtete Werte der per Fouriertransformation Intensitäten für Träger, erste Oberwelle und zweite Oberwelle aufgetragen. Die Endpunkte der aufgetragenen Werte werden wie gezeigt zu einem Dreieck verbunden. Fig. 19 bezieht sich dabei auf die entsprechenden Werte aus Fig. 3 und 4. Wie man sieht, ergeben sich bereits ohne die ebenfalls mögliche Analyse der zugehörigen Phaseninformationen signifikante Unterschiede in den Formen von äußerem Dreiecks, welches Abwesenheit von Fehlern repräsentiert, und innerem Dreieck, welches bei Anwesenheit eines Materialfehlers resultiert. Wie bereits aus Fig. 3 und 4 zu entnehmen, ergibt sich die interessante Tatsache, daß die Signale der 1. Oberwelle eine Differenz von ca. 8 dB aufweisen und somit deutlich stärker in Erscheinung treten als die Differenz für das Trägersignal oder die der 2. Oberwelle ( jeweils ca. 3 dB). - Es bleibt unbenommen, die gewählte log. Skalenrichtung umzukehren, so daß ein Dreieck bei Anwesenheit eines Fehlers größer dargestellt wird, als im fehlerfreien Fall.

Es versteht sich, daß die Figuren 15 bis 19 lediglich als Beispiele zu verstehen sind, wie erfindungsgemäß errechnete Gut- bzw. Schadens-Resultate visualisiert werden können. Die Anzahl der Visualisierungsmöglichkeiten im Vergleich zu bislang bekannten Darstellungsweisen für Prüfverfahren der hier betrachteten Art ist vergleichsweise umfangreich und kann aufgrund des fast vollständig digitalen Charakters der vorgeschlagenen Fehlererkennung in annähernd beliebiger Weise modifiziert werden. Es kann also auch eine herkömmliche Darstellung mit entsprechend reduziertem Informationsgehalt vorgenommen werden, sofern dies zu Vergleichszwecken gewünscht sein sollte. - Weiterhin versteht sich, daß für ein automatisiertes Fehlerbehandlungsverfahren die erfindungsgemäß gewonnenen Datensätze und Informationen einer zweckmäßig geeigneten Mustererkennungseinrichtung zugeführt werden müssen, um externe Hilfsmittel wie Fehler-Markierungseinrichtungen, Sägen usw. automatisch ansteuern zu können. - Die erfindungsgemäßen Vorrichtungen und Verfahren können mit sehr diversen Sensor-Systemen verwendet werden, insbesondere solchen auf Ultraschall- und Wirbelstrom-Basis, aber auch mit sog. EMAT - Systemen.

## Patentansprüche

1. Verfahren zur Ortung von metallischen Gegenständen, oder zur Erkennung von Defekten (15) an Gegenständen (13),
bei welchem die wechselspannungsmäßige Bestromung mindestens einer Sendespule (12) durch ein Trägersignal (Uᵢₙ) mit einer Trägerfrequenz bewirkt wird, mittels mindestens einer Empfangsspule (14) ein amplituden- und/oder phasenmoduliertes Empfangssignal (Uₒᵤₜ) empfangen wird,
und wobei weiterhin eine Demodulation des Empfangssignals unter Verwendung eines Computers und eines Fourier- oder Wavelet-Transformationsverfahrens vorgenommen wird, dergestalt, dass eine vordefinierte Anzahl digital ermittelter Meßresultate (Samples) einem solchen Transformationsverfahren zugeführt werden, für die Frequenz des Trägersignals und mindestens einer weiteren Frequenzkomponente zugehörige Betragswerte und/oder Phasenwerte errechnet werden und die so errechneten Betrags- und/oder Phasenwerte als direkte Maßzahlen eines aktuellen Signalstärke-Vektors oder -phasenlagen-Vektors des demodulierten Empfangssignals verwendet werden,
**dadurch gekennzeichnet, dass**
die mindestens eine weitere Frequenzkomponente im Bereich der Oberwellen der Trägerfrequenz gewählt wird
und dass
pro Vollwelle des Trägersignals weniger als 1 Sample erfaßt und verarbeitet wird, somit eine lückende Datenerfassung im Sinne eines Undersamplings erfolgt.

2. Verfahren nach Anspruch 1, wobei zeitlich aufeinanderfolgende Fourier- oder Wavelet-Transformationen durchgeführt werden, welche auf Mengen von jeweils mindestens 3 und bevorzugt mindestens 9 sukzessiv ermittelten Messwerten (Samples) beruhen.

3. Verfahren nach Anspruch 2, bei dem Folgen von zeitlich einander überlagerten Sample-Mengen verwendet werden.

4. Verfahren nach einem der vorhergehenden Ansprüche, welches ein zusätzliches digitales Verfahren verwendet, bei dem das zu demodulierende Signal und/oder dessen Oberwellen gefiltert werden.

5. Verfahren nach Anspruch 4, bei welchem eine digitale Tiefpasswirkung für das demodulierte Signal bereitgestellt wird und die Bandbreite des die digitale Tiefpasswirkung bereitstellenden Elements dadurch variierbar gemacht wird, daß eine unterschiedlich große Anzahl von digital ermittelten Meßwerten (Samples) einer jeweiligen Fourier- oder Wavelet-Transformation zugeführt wird, so daß eine kleine Anzahl von Samples einen größeren Frequenzbereich des die digitale Tiefpasswirkung bereitstellenden Elements und eine größere Anzahl von Samples einen kleineren Frequenzbereich des die digitale Tiefpasswirkung bereitstellenden Elements bewirkt.

6. Verfahren nach Anspruch 5, bei dem die Anzahl von Samples umgekehrt proportional zur Frequenz eines von einem Geschwindigkeitsgeber (17) abgegebenen Frequenzsignals gewählt wird, oder direkt proportional zu von dem Geschwindigkeitsgeber abgegebenen Pulslängen ist.

7. Vorrichtung, die zur Durchführung eines Verfahrens nach einem der vorgenannten Ansprüche 1 bis 6 eingerichtet ist, mit mindestens einer Sendespule, mindestens einer Empfangsspule, mindestens einer elektronischen Recheneinheit, mindestens einem Analog-Digital-Wandler, und einem oder mehreren diese Einrichtungen umschließenden Gehäuse(n).

## Claims

1. Method for locating metallic objects, or for identifying defects (15) on objects (13), in which the AC voltage energization of at least one transmitting coil (12) is effected by a carrier signal (Uᵢₙ) having a carrier frequency, an amplitude- and/or phase-modulated received signal (Uₒᵤₜ) is received by means of at least one receiving coil (14), and a demodulation of the received signal is furthermore formed using a computer and a Fourier or wavelet transformation method, in such a way that a predefined number of digitally determined measurement results (samples) are fed to such a transformation method, associated magnitude values and/or phase values are calculated for the frequency of the carrier signal and at least one further frequency component and the magnitude and/or phase values thus calculated are used as direct measures of a present signal strength vector or phase angle vector of the demodulated received signal, **characterized in that** the at least one further frequency component is selected in the range of the harmonics of the carrier frequency and **in that** less than 1 sample is detected and processed per full wave of the carrier signal, and so an intermittent data acquisition in the sense of an undersampling is effected.

2. Method according to Claim 1, temporally successive Fourier or wavelet transformations being carried out which are based on sets of in each case at least 3 and preferably at least 9 progressively determined measured values (samples).

3. Method according to Claim 2, in which sequences of temporally mutually superposed sample sets are used.

4. Method according to one of the preceding claims, which uses an additional digital method in which the signal to be demodulated and/or the harmonics thereof are filtered.

5. Method according to Claim 4, in which a digital low-pass filter effect is provided for the demodulated signal and the bandwidth of the element providing the digital low-pass filter effect is made variable by virtue of a differently sized number of digitally determined measured values (samples) being fed to a respective Fourier or wavelet transformation, so that a small number of samples effects a larger frequency range of the element providing the digital low-pass filter effect and a larger number of samples effects a smaller frequency range of the element providing the digital low-pass filter effect.

6. Method according to Claim 5, in which the number of samples is chosen to be inversely proportional to the frequency of a frequency signal output by a speed sensor (17), or is directly proportional to pulse lengths output by the speed sensor.

7. Apparatus which is designed for carrying out a method according to one of the preceding Claims 1 to 6, having at least one transmitting coil, at least one receiving coil, at least one electronic computing unit, at least one analog-to-digital converter, and one or more housing(s) enclosing these devices.

## Revendications

1. Procédé de localisation d'articles métalliques ou de détection de défaut (15) sur des articles (13), dans lequel l'alimentation en tension alternative d'au moins une bobine d'émission est effectuée par un signal de porteuse (Uᵢₙ) ayant une fréquence porteuse, un signal de réception (Uₒᵤₜ) modulé en amplitude et/ou en phase est reçu au moyen d'au moins une bobine de réception (14),
et dans lequel une démodulation du signal de réception est en outre effectuée par utilisation d'un ordinateur et d'un procédé de transformation de Fourier ou en ondelettes de telle manière qu'un nombre prédéfini de résultats de mesures (échantillons) obtenus soient soumis à un procédé de transformation de ce type, pour la fréquence du signal de porteuse et pour au moins une autre composante de fréquence, des valeurs d'amplitude et/ou des valeurs de phase correspondantes sont calculées et les valeurs d'amplitude et/ou de phase ainsi calculées sont utilisées en tant que valeurs de mesure directes d'un vecteur d'intensité de signal ou d'un vecteur de position de phase actuel du signal de réception démodulé,
**caractérisée en ce que**
l'au moins une autre composante de fréquence est sélectionnée dans le domaine des harmoniques de la fréquence porteuse et
**en ce que** moins de 1 échantillon est détecté et traité pour chaque onde pleine du signal de porteuse, de telle sorte qu'il se produit une détection de données lacunaire au sens d'un sous-échantillonnage.

2. Procédé selon la revendication 1, dans lequel des transformations de Fourier ou en ondelettes sont effectuées séquentiellement dans le temps, lesquelles transformations reposent sur des quantités respectives d'au moins 3 et de préférence d'au moins 9 valeurs de mesure (échantillons) obtenues.

3. Procédé selon la revendication 2, dans lequel des suites d'échantillons-quantités se superposant les unes aux autres dans le temps sont utilisées.

4. Procédé selon l'une quelconque des revendications précédentes, qui utilise un procédé numérique supplémentaire au moyen duquel le signal et/ou ses harmoniques à démoduler sont filtrés.

5. Procédé selon la revendication 4, dans lequel un effet passe-bas numérique est produit pour le signal démodulé et la largeur de bande de l'élément produisant l'effet passe-bas numérique est rendu variable en faisant en sorte qu'un nombre variable de valeurs de mesure (échantillons) obtenues soient soumises à une transformation de Fourier ou en ondelettes respective, afin qu'un petit nombre d'échantillons conduise à un domaine de fréquence plus important de l'élément produisant l'effet passe-bas numérique et qu'un plus grand nombre d'échantillons conduise à un domaine de fréquence plus petit de l'élément produisant l'effet passe-bas numérique.

6. Procédé selon la revendication 5, dans lequel le nombre d'échantillons est sélectionné de manière à être inversement proportionnel à la fréquence d'un signal de fréquence délivré par un capteur de vitesse (17), ou est directement proportionnel à des longueurs d'impulsions délivrées par le capteur de vitesse.

7. Dispositif conçu pour mettre en oeuvre un procédé selon l'une quelconque des revendications 1 à 6, comportant au moins une bobine d'émission, au moins une bobine de réception, au moins une unité de calcul électronique, au moins un convertisseur analogique-numérique et un ou plusieurs boîtier(s) renfermant lesdits dispositifs.
